# EUROPÄISCHE PATENTSCHRIFT

(11) **EP 4 431 325 B1**
(45) Veröffentlichungstag und Bekanntmachung des Hinweises auf die Patenterteilung: **26.11.2025**
(21) Anmeldenummer: 23161462.9
(22) Anmeldetag: 13.03.2023
(51) Int. Cl.: B60K 1/04, H01M 50/244, B60K 1/00, H01M 50/249

(54) **KRAFTFAHRZEUG MIT EINER HOCHVOLTBATTERIE**
MOTOR VEHICLE HAVING A HIGH-VOLTAGE BATTERY
VÉHICULE AUTOMOBILE DOTÉ D'UNE BATTERIE HAUTE TENSION

(43) Veröffentlichungstag der Anmeldung: 18.09.2024
(73) Patentinhaber: MAGNA STEYR Fahrzeugtechnik GmbH & Co KG, 8041 Graz (AT)
(72) Erfinder: HOFER, Bernhard, 8053 Graz (AT); SCHWARZL, Werner, 8301 Laßnitzhöhe (AT)
(74) Vertreter: Zangger, Bernd

(56) Entgegenhaltungen:
- EP-A1- 3 598 521
- DE-A1- 102018 211 220
- DE-B3- 102016 115 647

## Beschreibung

### Gebiet der Erfindung

Die vorliegende Erfindung betrifft ein Kraftfahrzeug mit einer Hochvoltbatterie und ein Verfahren zur Herstellung eines solchen Kraftfahrzeugs.

### Stand der Technik

Es ist bekannt, dass geschlossene Hochvoltbatterien in Kraftfahrzeuge verbaut werden können, insbesondere als Antriebsbatterie zur Bereitstellung einer elektrischen Energie für den Antrieb des Kraftfahrzeugs. Die Batterie besitzt dann einen geschlossen Batteriekasten bzw. ein geschlossenes Batteriegehäuse, das die Zellmodule beherbergt. Eine solche Hochvoltbatterie wird mittels Schrauben am Fahrzeug befestigt. Dabei ist, außer an den Schraubstellen, üblicherweise ein Spalt zwischen der Batterie und der Fahrzeugstruktur von mindestens einigen Millimetern vorhanden, damit ein Scheuern im Betrieb (Geräusche, Korrosion...) vermieden wird, aber auch um eine kollisionsfreie Montage zu ermöglichen. Zur Wartung oder Reparatur muss die komplette Batterieeinheit vom Fahrzeug demontiert werden.

Üblicherweise weisen Batteriezellen in Einbaulage an ihrem oberen Ende elektrische Kontakte zur Abnahme der Spannung auf und an ihrem unteren Ende einen Zellenboden. Beispielsweise bei einem Unfall beschädigte Batteriezellen können dann über die elektrischen Kontakte, nach oben, in Richtung zum Fahrzeuginnenraum hin, ausgasen und dort Hitze entwickeln.

Aus der DE 10 2016 115647 B3 ist ein Batterieträger für ein Elektrokraftfahrzeug bekannt, welcher in einem Unterflurbereich eines Elektrokraftfahrzeuges montiert ist, wobei der Batterieträger eine Wanne mit einer Öffnung aufweist, wobei die Öffnung von einem Deckel geschlossen ist, wobei die Wanne in der Einbauposition im Elektrokraftfahrzeug mit ihrer Öffnung auf die Kraftfahrzeugvertikalrichtung nach unten zeigend angeordnet ist und dass wenigstens eine Batterie in der Wanne durch Koppelung mit einem Boden der Wanne oder an in der Wanne angeordneten Montageträgern, derart in der Einbauposition des Batterieträgers angeordnet ist, dass die Batterie mit ihren elektrischen Polen nach unten zeigend hängend montiert ist.

Die DE 10 2018 211220 A1 offenbart eine Speicherzelle zur Speicherung von elektrischer Energie mit elektrischen Anschlüssen, wobei in der Einbaulage der Speicherzelle die elektrischen Anschlüsse tiefer angeordnet sind als i) eine Zellentlüftung der Speicherzelle, und/oder ii) ein Befestigungsabschnitt zur Befestigung der Speicherzelle.

Dokument EP 3 598 521 A1 zeigt einen Batterieträger mit einer Wanne, die mindestens eine Wannenseitenwand und einen mit der Wannenseitenwand verbundenen Wannenboden aufweist, mit mehreren in der Wanne vorgesehenen und an der Wanne befestigten Tragprofilen, mit mindestens einem Batteriepack, der an zumindest zwei, neben dem Batteriepack verlaufende Tragprofile befestigt ist, mit einem die Wanne verschließbar ausgebildeten und mit dieser Wanne lösbar verbundenen Deckel und mit einem mit dem Batteriepack in thermischem Verbund stehenden Wärmetauscher, wobei der Deckel den Wärmetauscher ausbildet, wobei der Batteriepack mit Abstand zum Wannenboden angeordnet ist, welcher Wannenboden mit der Wannenseitenwand unlösbar verbunden oder mit diesem einteilig ausgebildet ist.

### Zusammenfassung der Erfindung

Es ist eine Aufgabe der Erfindung, ein Kraftfahrzeug mit einer Hochvoltbatterie anzugeben, dass die oben beschriebenen Probleme vermeidet, geringen Bauraumbedarf hat und zu einer verbesserten Fahrzeugsicherheit beiträgt. Eine weitere Aufgabe ist es, ein einfaches und kostengünstiges Verfahren zur Herstellung eines solchen Kraftfahrzeugs anzugeben.

Die Lösung der Aufgabe erfolgt durch ein Kraftfahrzeug mit einer Hochvoltbatterie mit den weiteren Merkmalen gemäß Anspruch 1.

Erfindungsgemäß umfasst die Hochvoltbatterie ein Batteriegehäuse, wobei das Batteriegehäuse zumindest Seitenwände und einen die Seitenwände oben bedeckenden Deckel umfasst, wobei eine Vielzahl von Batteriezellen im Batteriegehäuse angeordnet sind, wobei die Seitenwände und der Deckel einteilig durch eine unten offene Wanne ausgebildet sind und die Batteriezellen "hängend" in der Wanne montiert sind, so dass die elektrischen Kontakte der Batteriezellen nach unten gerichtet sind und die Zellenböden nach oben gerichtet sind.

Erfindungsgemäß wird ein Hochvoltspeicher mit hängenden Zellen in ein Kraftfahrzeug integriert. Die Zellen werden "umgedreht", das heißt, die Kontakte der Batteriezellen weisen nach unten - in Einbaulage im Kraftfahrzeug, somit zur Fahrbahn hin - und die Zellenböden sind oben an den Batteriezellen ausgebildet. Ein Ausgasen der Zellen erfolgt gegebenenfalls im Bereich der nun nach unten gerichteten Zellkontakte, also nach unten. Eine eventuelle Hitzeentwicklung ist nun in Richtung Unterfahrschutz/Fahrzeugaußenseite gerichtet und nicht wie sonst üblich, in Richtung zum Fahrzeuginneren.

Der Hochvoltspeicher weist zudem ein Batteriegehäuse auf, dass im Gegensatz zu den herkömmlichen Bauweisen keine getrennten seitlichen Gehäuse- bzw. Rahmenbauteile und keinen getrennten Deckel verwendet, sondern eine Wanne, die die Seitenwände und den in Einbaulage im Kraftfahrzeug oben liegenden Deckel des Batteriegehäuses ausbildet. Diese verkehrte Wanne kann einfach und kostengünstig mit weiteren Batteriebauteilen, wie insbesondere Batteriezellen bestückt werden und in die Fahrzeugkarosserie strukturintegriert eingebaut werden. Diese Wanne kann gleichzeitig die Bodengruppe von unten abschließen. Die Wanne kann direkt auf das Bodenblech des Kraftfahrzeugs abschließen und/oder beispielsweise bereichsweise das Bodenblech ausbilden. Ein wesentlicher Vorteil dieser Lösung ist der Bauraumzugewinn in Z-Richtung, da der Luftspalt, der üblicherweise zwischen Batteriedeckel und Bodenblech eingehalten werden muss, hier entfallen kann. Ein Verzicht auf getrennte Bauteile, wie einen getrennten Batteriedeckel oder getrennte Seitenteile bzw. Rahmenbauteile, kann auch einen Kosten- und Gewichtsvorteil darstellen.

Erfindungsgemäß sind eine Vielzahl von Querträgern der Tragstruktur des Kraftfahrzeugs innerhalb der Wanne der Hochvoltbatterie angeordnet. Bevorzugt sind die Querträger mit Seitenwänden und/oder dem Deckel der Wanne verschweißt. Die Querträger bilden somit bevorzugt eine verschweißte Struktur mit der Wanne. In einer anderen bevorzugt Ausführungsform sind die Querträger mit der Wanne einstückig ausgebildet. Bevorzugt ist die Wanne zusammen mit den Querträgern als Druckgussbauteil ausgebildet.

Erfindungsgemäß sind die Batteriezellen jeweils in den Zwischenräumen zwischen den Querträgern "hängend" an den Querträgern montiert, so dass mehrere parallele Reihen von Batteriezellen zwischen den Querträgern verlaufen.

Weiterbildungen der Erfindung sind in den abhängigen Ansprüchen, der Beschreibung sowie den beigefügten Zeichnungen angegeben.

Bevorzugt bildet der Deckel der Wanne ein Bodenblech des Kraftfahrzeugs und/oder ist der Deckel der Wanne von unten an einem Bodenblech befestigt, insbesondere verschraubt und/oder geklebt. Der Deckel der Wanne kann beispielsweise bereichsweise das Bodenblech ausbilden und beispielsweise in anderen Bereichen, insbesondere an Rändern, mit einem Bodenblech gefügt sein.

Der Deckel der Wanne kann Befestigungspunkte für Sitzquerträger aufweisen. Sitzquerträger sind bevorzugt an der Wanne befestigt, insbesondere mit dem Deckel der Wanne verklebt und/oder verschraubt.

Vorzugsweise ist die Wanne an einer übrigen Tragstruktur des Kraftfahrzeugs, bevorzugt an seitlichen Schwellern des Kraftfahrzeugs, von unten montiert, bevorzugt geklebt und geschraubt. Der Schweller kann beispielsweise in Schalenbauweise hergestellt sein. Die Wanne kann dann mit einer oder mehreren Schalen des Schwellers gefügt sein, jeweils bevorzugt geklebt und/oder geschraubt.

Die Wanne, insbesondere Seitenwände der Wanne, können einen Teil der Tragstruktur des Kraftfahrzeugs, bevorzugt der seitlichen Schweller des Kraftfahrzeugs, ausbilden. Beispielsweise kann eine Schale des Schwellers durch eine Seitenwand der Wanne gebildet werden.

Vorzugsweise bildet ein Unterfahrschutzblech den, die Wanne an deren Unterseite bedeckenden Boden der Hochvoltbatterie. Die Zugänglichkeit zu den Batteriezellen kann von unten gewährleistet sein, über ein bevorzugt demontierbares Blech das gleichzeitig als Unterfahrschutz dient.

Die Batteriezellen können einzeln in die Wanne montiert sein oder in Batteriezellenmodule zusammengefasst in die Wanne montiert sein. Die Hochvoltbatterie kann somit hängend montierte Batteriemodule aufweisen.

Vorzugsweise ist die Wanne der Hochvoltbatterie mit einer demontierbaren Dichtung, insbesondere Montagedichtung, zum Bodenblech hin abgedichtet.

Bevorzugt ist mindestens ein flächiges Kühlelement, insbesondere zumindest eine Kühlplatte, und/oder mindestens ein flächiges Feuerschutzelement an der Oberseite der Batteriezellen, zwischen Batteriezellen und Deckel der Wanne, angeordnet. Das oder die Kühlelemente und das oder die Feuerschutzelemente können über den Zellen eingelegt und fixiert sein.

Ein erfindungsgemäßes Verfahren zur Herstellung eines Kraftfahrzeugs, wie zuvor beschrieben, kann vorsehen, dass die Wanne zusammen mit den Querträgern als Druckgussbauteil, insbesondere in einem sogenannten "Megacasting"-Verfahren, hergestellt wird, sodass die Querträger bei der Herstellung der Wanne bereits in die Wanne integriert sind. Die Wanne kann dann mit den Batteriezellen außerhalb des Kraftfahrzeugs bestückt werden.

Ein erfindungsgemäßes Verfahren zur Herstellung eines Kraftfahrzeugs, wie zuvor beschrieben, kann vorsehen, dass in einem Vormontageprozess die Batteriezellen in der Wanne montiert werden, zur Herstellung der Hochvoltbatterie, und danach die vormontierte Hochvoltbatterie von unten in einer übrigen Tragstruktur des Kraftfahrzeugs montiert wird, bevorzugt an seitlichen Schwellern des Kraftfahrzeugs befestigt wird.

Zumindest ein flächiges Kühlelement, also eine Kühlplatte, kann vor dem Montieren der Batteriezellen in die Wanne, bevorzugt von unten, in die Wanne eingebaut, zum Beispiel eingelegt, werden. Danach werden die Batteriezellen in die Wanne montiert. Danach können die Batteriezellen verschaltet werden.

Die Vormontage des Batteriegehäuses erfolgt im ausgebauten Zustand, außerhalb des herzustellenden Kraftfahrzeug, und die Wanne ist von unten gut zugänglich. Die Wanne kann während der Vormontage auch umgedreht sein, so dass die Bestückung von oben erfolgen kann. Als Erstes wird bevorzugt die Kühlplatte eingebaut und fixiert. Danach folgen die Batteriezellen, welche dann elektrisch miteinander verbunden werden können.

Die vormontierte Batterie kann mit einer Schutzabdeckung bestückt an ein Montageband gebracht werden und von unten mittels üblicher Manipulationsvorrichtungen in das Fahrzeug eingebaut werden.

Die vormontierte Hochvoltbatterie kann von unten in einer übrigen Tragstruktur des Kraftfahrzeugs montiert werden, bevorzugt an seitlichen Schwellern des Kraftfahrzeugs befestigt werden, zum Beispiel verschraubt werden.

Eine untere Schließplatte, welche gleichzeitig als Unterfahrschutz ausgeführt sein kann, kann am Ende der Vormontage an der Wanne befestigt werden oder nach der Montage der Wanne an der Tragstruktur, an der Tragstruktur und/oder an der Wanne befestigt werden.

### Kurzbeschreibung der Zeichnungen

Die Erfindung wird im Folgenden beispielhaft unter Bezugnahme auf die Zeichnungen beschrieben.
- Fig. 1: ist eine Schnittansicht eines Teilbereichs eines erfindungsgemäßen Kraftfahrzeugs in Querrichtung des Fahrzeugs (X-Schnitt).
- Fig. 2: ist eine Schnittansicht eines Teilbereichs eines erfindungsgemäßen Kraftfahrzeugs in Längsrichtung des Fahrzeugs (Y-Schnitt).

### Detaillierte Beschreibung der Erfindung

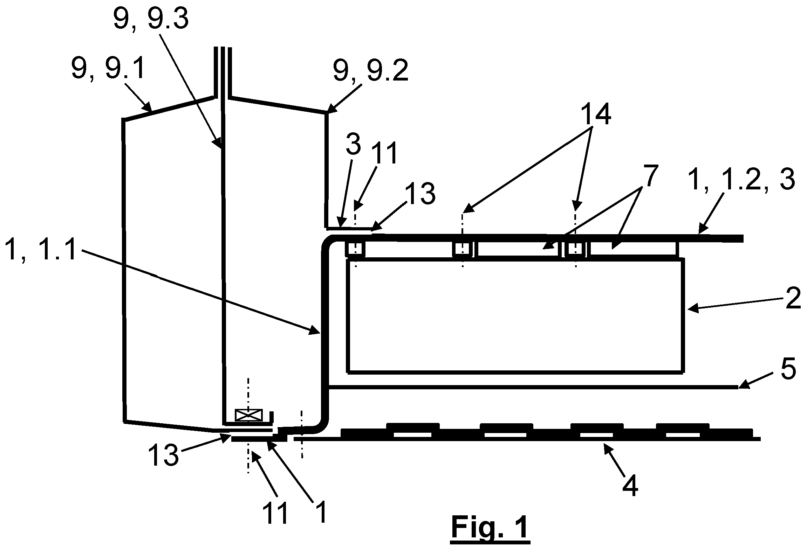

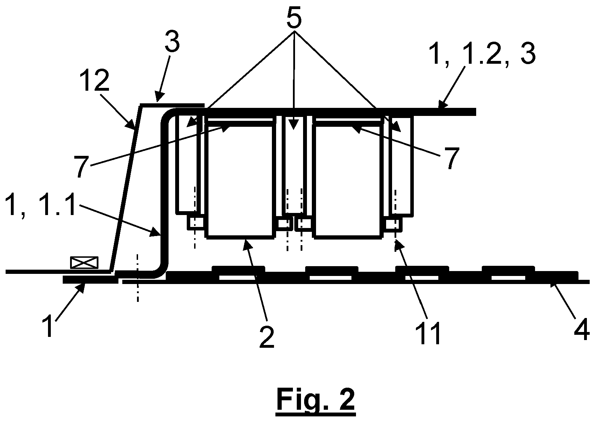

Fig. 1 ist eine schematische Darstellung einer Hochvoltbatterie in einer Wanne 1 eines erfindungsgemäßen Kraftfahrzeugs, in Querrichtung. Das Fahrzeug ist also von vorne gesehen. In Fig. 2 ist das selbe Fahrzeug in einem Schnitt normal zum Schnitt der Fig. 1 dargestellt, also in Längsrichtung des Fahrzeugs, von der Seite her gesehen.

Das ausschnittsweise dargestellte Kraftfahrzeug umfasst eine Hochvoltbatterie, die ein Batteriegehäuse umfasst, wobei das Batteriegehäuse Seitenwände 1.1 und einen die Seitenwände 1.1 oben bedeckenden Deckel 1.2 umfasst. Die Seitenwände 1.1 und der Deckel 1.2 sind einteilig durch eine unten offene Wanne 1 ausgebildet.

Eine Vielzahl von Batteriezellen 2 sind im Batteriegehäuse, also in der Wanne 1, angeordnet. Die Batteriezellen 2 sind "hängend" in der Wanne 1 montiert, so dass die elektrischen Kontakte der Batteriezellen 2 nach unten gerichtet sind und die Zellenböden nach oben gerichtet sind.

Der Deckel 1.2 der Wanne 1 bildet ein Bodenblech 3 des Kraftfahrzeugs und ist an den seitlichen Rändern von unten an einem weiteren, randseitigen Bodenblech 3 befestigt, nämlich über Verschraubungen 11 verschraubt und zusätzlich geklebt, mittels Klebstoff 13 zwischen dem randseitigen Bodenblech 3 und dem Deckel 1.2 der Wanne 1. Das randseitige Bodenblech 3 kann vom Schweller 9 ausgebildet sein, insbesondere von einer Schale des Schwellers innen oben 9.2.

Der Deckel 1.2 der Wanne 1 weist Befestigungspunkte 14 für Sitzquerträger auf. Sitzquerträger können direkt an der Wanne 1 befestigt werden, insbesondere mit dem Deckel 1.2 verschraubt werden.

Die Wanne 1 ist an einem seitlichen Schweller 9 des Kraftfahrzeugs befestigt, nämlich von unten montiert. Die Befestigung der Wanne 1 am Schweller 9 erfolgt mittels Klebstoff 13 und Schraubverbindung 11. Die Befestigung am Schweller 9 kann an einem seitlichen Rand der Wanne 1 erfolgen, der einen zur Fahrbahn und zum Deckel 1.2 parallelen Flansch ausbildet. Die Wanne 1 ist in Fig. 1 an einer Schale 9.1 des Schwellers 9 die die Außenseite des Schwellers 9 ausbildet befestigt. Eine zusätzliche Befestigung der Wanne 1 erfolgt, wie zuvor beschrieben, mit einer Schale 9.2 des Schwellers 9, die innen liegen kann und einen oberen Teil des Schwellers 9 ausbilden kann. Ein unterer Teil der Innenseite des Schwellers 9 kann durch die Seitenwände 1.1 der Wanne 1 ausgebildet sein. Der Schweller 9 kann zudem eine mittige Versteifung oder Schale 9.3 aufweisen. Die mittige Schale 9.3 kann ebenfalls an der Wanne 1 befestigt sein.

Die Wanne 1, insbesondere Seitenwände 1.1 der Wanne 1, bilden somit einen Teil der Tragstruktur des Kraftfahrzeugs, nämlich der seitlichen Schweller 9 des Kraftfahrzeugs, aus.

Eine Vielzahl von Querträgern 5 der Tragstruktur des Kraftfahrzeugs sind innerhalb der Wanne 1 der Hochvoltbatterie angeordnet, wobei die Querträger 5 einstückig mit der Wanne 1 ausgebildet sind.

Wie in Fig. 2 gut ersichtlich, sind die Batteriezellen 2 jeweils in den Zwischenräumen zwischen den Querträgern 5 "hängend" an den Querträgern 5 montiert, so dass mehrere parallele Reihen von Batteriezellen 2 zwischen den Querträgern 5 verlaufen.

Mindestens ein flächiges Kühlelement 7 kann an der Oberseite der Batteriezellen 2, zwischen Batteriezellen 2 und Deckel 1.2 der Wanne 1 angeordnet sein.

Ein Unterfahrschutzblech 4 bildet den die Wanne 1 an deren Unterseite bedeckenden Boden der Hochvoltbatterie.

Im Gegensatz zu herkömmlichen Bauweisen wird erfindungsgemäß ein Batteriegehäuse wie eine verkehrte Wanne 1 in eine Fahrzeugkarosserie strukturintegriert eingebaut und schließt gleichzeitig eine Bodengruppe von unten ab. Dabei wird zum Fügen der Wanne 1 ein Montageklebstoffsystem mit Klebstoff 13 verwendet, in Kombination mit mechanischen Fügeelementen 11, wie Schrauben Nieten etc. Die mechanischen Fügepunkte 11 ermöglichen eine kontinuierliche Fertigung der Fahrzeuge ohne dass das Fahrzeug zum Aushärten des Klebstoffes 13 ausgeschleust werden muss.

Die Zugänglichkeit zu den Batteriemodulen ist von unten gewährleistet über ein demontierbares Blech 4, das gleichzeitig als Unterfahrschutz ausgeführt ist.

Die Batteriemodule sind im Gehäuse an Querträgern 5 hängend montiert. Die Querträger 5 bilden eine Einheit mit der Batteriewanne 1.

Die Vormontage des Batteriegehäuses erfolgt im ausgebauten Zustand und das Gehäuse, nämlich die Wanne 1, ist von unten zugänglich. Als erstes wird die Kühlplatte 7 von unten eingebaut und fixiert. Danach folgen die Batteriemodule 2 welche noch elektrisch miteinander verbunden werden müssen. Als Letztes kommt die Schließplatte 4 von unten, welche gleichzeitig als Unterfahrschutz ausgeführt ist. Für die Komplettierung der Batterie kann diese auch gewendet werden, um den Verbau der Komponenten zu vereinfachen.

Die Batteriewanne 1 kann als einteiliger Druckgußbauteil (Megacasting) ausgeführt werden, welche auch die Querträger 5 und die Sitzbefestigungspunkte 14 schon integriert hat. Außerdem können notwendige Anbindungspunkte für Komponenten im Innenraum bereits im Gußteil enthalten sein.

In einer Ausführungsvariante sind die Kühlelemente 7 über den Zellen 2 eingelegt und fixiert.

Ein wesentlicher Vorteil dieser Anordnung ist der Bauraumzugewinn in Y Richtung um den Querschnitt, den üblicherweise ein Batterierahmen benötigt, sowie die Integration mehrerer Bauteile und die damit verbundene Einsparung an Einzelteilen und an der Fügetechnik.

Die Z-Maßkette wird ebenfalls kleiner aufgrund des fehlenden Luftspaltes zwischen Bodenplatte und Batteriegehäuse.

Durch den Entfall des Batterierahmens werden weiters Kosten und Gewicht eingespart.

### Bezugszeichenliste

- 1: Wanne
- 1.1: Wanne Seitenwand
- 1.2: Wanne Deckel
- 2: Batteriezellen
- 3: Bodenblech
- 4: Unterfahrschutzblech
- 5: Querträger
- 7: Kühlelement
- 9: Schweller
- 9.1: Schweller außen
- 9.2: Schweller innen oben
- 9.3: Schweller mittig
- 11: Verschraubung
- 12: Tragstruktur
- 13: Klebstoff
- 14: Befestigungspunkte für Sitzquerträger

## Patentansprüche

1. Kraftfahrzeug mit einer Hochvoltbatterie, wobei die Hochvoltbatterie ein Batteriegehäuse umfasst, wobei das Batteriegehäuse zumindest Seitenwände (1.1) und einen die Seitenwände (1.1) oben bedeckenden Deckel (1.2) umfasst, wobei eine Vielzahl von Batteriezellen (2) im Batteriegehäuse angeordnet sind,
wobei die Batteriezellen (2) "hängend" in der Wanne (1) montiert sind, so dass die elektrischen Kontakte der Batteriezellen (2) nach unten gerichtet sind und die Zellenböden nach oben gerichtet sind, **dadurch gekennzeichnet , dass** die Seitenwände (1.1) und der Deckel (1.2) einteilig durch eine unten offene Wanne (1) ausgebildet sind, wobei eine Vielzahl von Querträgern (5) der Tragstruktur des Kraftfahrzeugs innerhalb der Wanne (1) der Hochvoltbatterie angeordnet sind, wobei die Querträger (5) mit Seitenwänden (1.1) und/oder dem Deckel (1.2) der Wanne (1) verschweißt oder einstückig sind, wobei die Batteriezellen (2) jeweils in den Zwischenräumen zwischen den Querträgern (5) "hängend" an den Querträgern (5) montiert sind, so dass mehrere parallele Reihen von Batteriezellen (2) zwischen den Querträgern (5) verlaufen.

2. Kraftfahrzeug nach Anspruch 1,
**dadurch gekennzeichnet , dass** der Deckel (1.2) der Wanne (1) ein Bodenblech (3) des Kraftfahrzeugs bildet und/oder von unten an einem Bodenblech (3) befestigt ist, insbesondere verschraubt und/oder geklebt.

3. Kraftfahrzeug nach zumindest einem der vorhergehenden Ansprüche,
**dadurch gekennzeichnet , dass** der Deckel (1.2) der Wanne (1) Befestigungspunkte (14) für Sitzquerträger aufweist und/oder dass Sitzquerträger an der Wanne befestigt sind, insbesondere mit dem Deckel (1.2) der Wanne (1) verklebt und/oder verschraubt.

4. Kraftfahrzeug nach zumindest einem der vorhergehenden Ansprüche,
**dadurch gekennzeichnet , dass** die Wanne (1) an einer übrigen Tragstruktur des Kraftfahrzeugs, bevorzugt an seitlichen Schwellern (9) des Kraftfahrzeugs, von unten montiert ist, bevorzugt geklebt und geschraubt.

5. Kraftfahrzeug nach zumindest einem der vorhergehenden Ansprüche,
**dadurch gekennzeichnet , dass** die Wanne (1), insbesondere Seitenwände (1.1) der Wanne (1), einen Teil der Tragstruktur des Kraftfahrzeugs, bevorzugt der seitlichen Schweller (9) des Kraftfahrzeugs, ausbilden.

6. Kraftfahrzeug nach zumindest einem der vorhergehenden Ansprüche,
**dadurch gekennzeichnet , dass** ein Unterfahrschutzblech (4) den, die Wanne (1) an deren Unterseite bedeckenden Boden der Hochvoltbatterie bildet.

7. Kraftfahrzeug nach zumindest einem der vorhergehenden Ansprüche,
**dadurch gekennzeichnet , dass** mindestens ein flächiges Kühlelement (7) an der Oberseite der Batteriezellen (2), zwischen Batteriezellen (2) und Deckel (1.2) der Wanne (1) angeordnet ist.

8. Verfahren zur Herstellung eines Kraftfahrzeugs nach zumindest einem der Ansprüche 1 bis 7,
**dadurch gekennzeichnet , dass** die Wanne (1) zusammen mit den Querträgern (5) als Druckgussbauteil, insbesondere in einem sogenannten "Megacasting"-Verfahren, hergestellt wird, sodass die Querträger (5) bei der Herstellung der Wanne (1) bereits in die Wanne (1) integriert sind.

9. Verfahren zur Herstellung eines Kraftfahrzeugs nach zumindest einem der Ansprüche 1 bis 7,
**dadurch gekennzeichnet , dass** in einem Vormontageprozess die Batteriezellen (2) in der Wanne (1) montiert werden, zur Herstellung der Hochvoltbatterie, und danach die vormontierte Hochvoltbatterie von unten in einer übrigen Tragstruktur des Kraftfahrzeugs montiert wird, bevorzugt an seitlichen Schwellern (9) des Kraftfahrzeugs befestigt.

## Claims

1. Motor vehicle having a high-voltage battery, wherein the high-voltage battery comprises a battery housing, wherein the battery housing comprises at least side walls (1.1) and a cover (1.2) which covers the side walls (1.1) at the top, wherein a large number of battery cells (2) are arranged in the battery housing,
wherein the battery cells (2) are mounted "suspended" in the trough (1) so that the electrical contacts of the battery cells (2) are oriented downwards and the cell bases are oriented upwards **characterized in that** the side walls (1.1) and the cover (1.2) are formed in one piece by a trough (1) which is open at the bottom wherein a large number of cross-members (5) of the supporting structure of the motor vehicle are arranged inside the trough (1) of the high-voltage battery, wherein the cross-members (5) are welded to or integral with side walls (1.1) and/or the cover (1.2) of the trough (1) wherein the battery cells (2) are each mounted "suspended" from the cross-members (5) in the gaps between the cross-members (5), so that a plurality of parallel rows of battery cells (2) run between the cross-members (5).

2. Motor vehicle according to Claim 1,
**characterized in that** the cover (1.2) of the trough (1) forms a floor panel (3) of the motor vehicle and/or is fastened, in particular screwed and/or adhesively bonded, to a floor panel (3) from beneath.

3. Motor vehicle according to at least one of the preceding claims,
**characterized in that** the cover (1.2) of the trough (1) has fastening points (14) for seat cross-members and/or **in that** seat cross-members are fastened to the trough, in particular adhesively bonded and/or screwed to the cover (1.2) of the trough (1).

4. Motor vehicle according to at least one of the preceding claims,
**characterized in that** the trough (1) is mounted, preferably adhesively bonded and screwed, to another supporting structure of the motor vehicle from beneath, preferably to lateral sills (9) of the motor vehicle.

5. Motor vehicle according to at least one of the preceding claims,
**characterized in that** the trough (1), in particular side walls (1.1) of the trough (1), form part of the supporting structure of the motor vehicle, preferably of the lateral sills (9) of the motor vehicle.

6. Motor vehicle according to at least one of the preceding claims,
**characterized in that** an underride guard plate (4) forms the base of the high-voltage battery, which covers the trough (1) on the lower side thereof.

7. Motor vehicle according to at least one of the preceding claims,
**characterized in that** at least one planar cooling element (7) is arranged on the upper side of the battery cells (2), between the battery cells (2) and the cover (1.2) of the trough (1).

8. Method for producing a motor vehicle according to at least one of Claims 1 to 7,
**characterized in that** the trough (1) is produced together with the cross-members (5) as a die-cast component, in particular by a so-called "megacasting" process, so that the cross-members (5) are already integrated in the trough (1) when the trough (1) is produced.

9. Method for producing a motor vehicle according to at least one of Claims 1 to 7,
**characterized in that** the battery cells (2) are mounted in the trough (1) in a pre-assembly process, in order to produce the high-voltage battery, and then the pre-assembled high-voltage battery is mounted from beneath in another supporting structure of the motor vehicle, preferably is fastened to lateral sills (9) of the motor vehicle.

## Revendications

1. Véhicule à moteur avec une batterie haute tension, la batterie haute tension comprenant un boîtier de batterie, le boîtier de batterie comprenant au moins des parois latérales (1.1) et un couvercle (1.2) recouvrant en haut les parois latérales (1.1), une pluralité d'éléments de batterie (2) étant disposés dans le boîtier de batterie,
les éléments de batterie (2) étant montés « en suspension » dans la cuve (1) de telle sorte que les contacts électriques des éléments de batterie (2) sont dirigés vers le bas et les fonds d'élément sont dirigés vers le haut,
**caractérisé en ce que** les parois latérales (1.1) et le couvercle (1.2) sont réalisés en une partie par une cuve (1) ouverte vers le bas, une pluralité de traverses (5) de la structure porteuse du véhicule à moteur étant disposées à l'intérieur de la cuve (1) de la batterie haute tension, les traverses (5) étant soudées ou d'un seul tenant avec des parois latérales (1.1) et/ou le couvercle (1.2) de la cuve (1), les éléments de batterie (2) étant montés chacun dans les espaces intermédiaires entre les traverses (5) « en suspension » sur les traverses (5) de telle sorte que plusieurs rangées parallèles d'éléments de batterie (2) s'étendent entre les traverses (5).

2. Véhicule à moteur selon la revendication 1,
**caractérisé en ce que** le couvercle (1.2) de la cuve (1) forme une tôle de plancher (3) du véhicule à moteur et/ou est fixé, en particulier vissé et/ou collé, depuis le bas sur une tôle de plancher (3).

3. Véhicule à moteur selon au moins l'une des revendications précédentes,
**caractérisé en ce que** le couvercle (1.2) de la cuve (1) comporte des points de fixation (14) pour des traverses d'assise, et/ou que des traverses d'assise sont fixées sur la cuve, en particulier sont collées et/ou vissées au couvercle (1.2) de la cuve (1).

4. Véhicule à moteur selon au moins l'une des revendications précédentes,
**caractérisé en ce que** la cuve (1) est montée, de manière préférée est collée et vissée, depuis le bas sur une structure porteuse restante du véhicule à moteur, de manière préférée sur des seuils (9) latéraux du véhicule à moteur.

5. Véhicule à moteur selon au moins l'une des revendications précédentes,
**caractérisé en ce que** la cuve (1), en particulier des parois latérales (1.1) de la cuve (1) forment une partie de la structure porteuse du véhicule à moteur, de manière préférée des seuils (9) latéraux du véhicule à moteur.

6. Véhicule à moteur selon au moins l'une des revendications précédentes,
**caractérisé en ce qu'**une tôle anti-encastrement (4) forme le fond de la batterie haute tension recouvrant la cuve (1) sur son côté inférieur.

7. Véhicule à moteur selon au moins l'une des revendications précédentes,
**caractérisé en ce qu'**au moins un élément de refroidissement (7) plat est disposé sur le côté supérieur de l'élément de batterie (2) entre des éléments de batterie (2) et le couvercle (1.2) de la cuve (1).

8. Procédé de fabrication d'un véhicule à moteur selon au moins l'une des revendications 1 à 7,
**caractérisé en ce que** la cuve (1) est fabriquée conjointement avec les traverses (5) en tant que composant moulé sous pression, en particulier dans un procédé dit de « méga-coulée » si bien que les traverses (5) sont déjà intégrées dans la cuve (1) lors de la fabrication de la cuve (1).

9. Procédé de fabrication d'un véhicule à moteur selon au moins l'une des revendications 1 à 7,
**caractérisé en ce que** les éléments de batterie (2) sont montés dans la cuve (1) dans un procédé de prémontage, pour fabriquer la batterie haute tension, puis la batterie haute tension prémontée est montée depuis le bas dans une structure porteuse restante du véhicule à moteur, de manière préférée sur des seuils (9) latéraux du véhicule à moteur.
